# EUROPEAN PATENT APPLICATION

(11) **EP 4 525 116 A1**
(43) Date of publication of application: **19.03.2025**
(21) Application number: 24817457.5
(22) Date of filing: 29.04.2024
(51) Int. Cl.: H01M 10/056, H01M 10/0562, H01M 10/0565, H01M 10/052

(54) **SOLID ELECTROLYTE COMPOSITION, AND SOLID ELECTROLYTE MEMBRANE AND ALL-SOLID-STATE BATTERY COMPRISING SAME**

(30) Priority: 20.06.2023 KR 20230078642
(71) Applicant: LG Energy Solution, Ltd., Seoul 07335 (KR)
(72) Inventor: The designation of the inventor has not yet been filed
(74) Representative: Goddar, Heinz J.
(86) International application number: PCT/KR2024/005775
(87) International publication number: WO 2024/262788

(57) **Abstract**

The present invention relates to a solid electrolyte composition for an all-solid-state battery, which includes a solid electrolyte, a binder, a solvent, and a dispersant, wherein the dispersant is a carboxylic acid compound with a weight-average molecular weight of 1000 to 5000, a solid electrolyte membrane made therefrom, and an all-solid-state battery comprising the same.

## Description

### [Technical Field]

The present application claims the benefit of priority to Korean Patent Application No. 10-2023-0078642, filed on June 20, 2023, the disclosure of which is incorporated herein by reference in its entirety.

The present invention relates to a solid electrolyte composition, and a solid electrolyte membrane and an all-solid-state battery comprising the same.

### [Related Art]

A variety of batteries are being researched to overcome the limitations of current lithium secondary batteries in terms of capacity, safety, output, enlargement, and microminiaturization.

Representative examples include metal-air batteries, which have a very high theoretical capacity compared to lithium secondary batteries; all-solid-state batteries, which have no risk of explosion and are safe; supercapacitors in terms of output; NaS batteries or redox flow batteries (RFB) for large-scale applications; and thin film batteries for microminiaturization. Continuous research is being conducted in academia and industry on these technologies.

An all-solid-state battery is a battery in which the liquid electrolyte used in a conventional lithium secondary battery is replaced with a solid electrolyte, and since no flammable solvent is used in the battery, there is no possibility of ignition or explosion due to the decomposition reaction of the conventional electrolyte, which greatly improves safety. In addition, since lithium (Li) metal or lithium alloys can be used as a negative electrode material, it has the advantage of dramatically improving the energy density per mass and volume of the battery.

For improving the energy density of all-solid-state batteries, the fabrication of a solid electrolyte membrane is essential. The solid electrolyte membrane can be produced by dispersing the solid electrolyte in a solvent to create a slurry form of the solid electrolyte composition, applying the composition to one side of a release film, drying it, and subsequently removing the release film. To obtain a solid electrolyte membrane with uniform thickness, it is crucial to enhance the dispersion of the solid electrolyte within the composition, which is also closely related to the performance of the all-solid-state battery. If the solid electrolyte is not sufficiently dispersed within the composition, the uniformity in thickness of the solid electrolyte membrane will decrease, potentially leading to the degradation of the all-solid-state battery's performance.

Therefore, research on solid electrolyte compositions for all-solid-state batteries that can enhance the dispersion of the solid electrolyte is needed.

### [Prior Art Reference]

### [Patent Reference]

Korean Laid-Open Patent Publication No. 10-2021-0134748

### [Disclosure]

### [Technical Problem]

The present inventors have completed the present invention by confirming that using a carboxylic acid compound with a weight average molecular weight of 1000 to 5000 as a dispersant in a solid electrolyte composition for all-solid-state batteries can suppress the agglomeration of the solid electrolyte within the composition and improve dispersion. This led to the completion of the present invention.

Therefore, it is an object of the present invention to provide a solid electrolyte composition for an all-solid-state battery that can improve the dispersion of the solid electrolyte.

Additionally, it is an object of the present invention to provide a solid electrolyte membrane with uniform thickness and high ionic conductivity by manufacturing a solid electrolyte membrane from the above solid electrolyte composition.

Furthermore, it is an object of the present invention to provide an all-solid-state battery with excellent lifetime characteristics by including the solid electrolyte membrane.

### [Technical Solution]

To accomplish the above objectives, the present invention provides a solid electrolyte composition for an all-solid-state battery, which includes a solid electrolyte, a binder, and a dispersant, wherein the dispersant is a carboxylic acid compound with a weight-average molecular weight of 1000 to 5000.

Additionally, the present invention provides a solid electrolyte membrane for an all-solid-state battery, manufactured using the solid electrolyte composition of the present invention.

Furthermore, the present invention provides an all-solid-state battery comprising: a positive electrode, a negative electrode, and a solid electrolyte membrane interposed therebetween, wherein the solid electrolyte membrane is the solid electrolyte membrane of the present invention.

### [Advantageous Effects]

The solid electrolyte composition for an all-solid-state battery of the present invention can suppress the agglomeration of the solid electrolyte within the composition and improve its dispersion.

Additionally, the solid electrolyte membrane manufactured using the solid electrolyte composition for an all-solid-state battery of the present invention can have a uniform thickness and high ionic conductivity.

Furthermore, the all-solid-state battery that includes the solid electrolyte membrane of the present invention can have excellent performance.

### [Brief Description of Drawings]

FIG. 1 is a graph showing dispersion particle size distribution of the solid electrolyte in the solid electrolyte composition for an all-solid-state battery of Experimental Example 1.
FIG. 2 is a graph showing the lifetime characteristics of the all-solid-state battery of Experimental Example 3.

### [Best Mode]

Hereinafter, the present invention will be described in more detail.

The terms and words used in this specification and claims are not to be construed in their ordinary or dictionary sense, but rather in a sense and concept consistent with the technical idea of the present invention, based on the principle that the inventor may properly define the concept of a term to best describe his/her invention.

The terms used in the present invention are used merely to describe particular examples, and are not intended to limit the present invention. Expressions in the singular include the plural unless the context clearly indicates otherwise. In the present invention, the terms "comprising" or "having" and the like are intended to designate the presence of the features, numbers, steps, actions, components, parts, or combinations thereof described in the specification and are not intended to preclude the possibility of the presence or addition of one or more other features, numbers, steps, actions, components, parts, or combinations thereof.

### Solid Electrolyte Composition for All-Solid-State Battery

The present invention relates to a solid electrolyte composition for an all-solid-state battery, wherein the solid electrolyte composition for the all-solid-state battery comprises a solid electrolyte, a binder, and a dispersant, and wherein the dispersant is a carboxylic acid compound having a weight-average molecular weight (Mw) of 1000 to 5000.

Conventional solid electrolyte compositions for all-solid-state batteries do not include a dispersant, which causes the solid electrolyte to agglomerate within the composition. When the solid electrolyte agglomerates, the dispersion particle size of the solid electrolyte within the solid electrolyte composition for an all-solid-state battery increases. If the dispersion particle size of the solid electrolyte increases, the thickness of the solid electrolyte membrane for an all-solid-state battery manufactured using the solid electrolyte composition becomes uneven, leading to decrease in the performance of the all-solid-state battery containing this film.

The solid electrolyte composition for an all-solid-state battery of the present invention uses a carboxylic acid compound having a weight-average molecular weight of 1000 to 5000 as a dispersant in the composition, which suppresses agglomeration of the solid electrolyte in the composition, improving dispersion of the solid electrolyte, and having excellent solubility in the solvent. As a result, a solid electrolyte membrane for an all-solid-state battery with a uniform thickness and excellent ionic conductivity can be provided.

If the carboxylic acid compound is not used, the dispersion of the solid electrolyte may be degraded, so that it may be desirable to use the carboxylic acid compound as a dispersant to improve the dispersion of the solid electrolyte. Additionally, if the weight-average molecular weight of the carboxylic acid compound is less than 1000, it has excellent solubility in the solvent but poor aggregation control over the solid electrolyte, potentially leading to agglomeration of the solid electrolyte. Conversely, if the weight-average molecular weight of the carboxylic acid compound exceeds 5000, it may have excellent aggregation control over the solid electrolyte but poor solubility in the solvent. As a result, a solid electrolyte membrane for an all-solid-state battery with an uneven thickness may be produced, which may degrade the performance of the all-solid-state battery including the solid electrolyte membrane.

The dispersant may include one or more selected from the group consisting of glycolic acid ethoxylate lauryl ether, glycolic acid ethoxylate oleyl ether, and glycolic acid ethoxylate 4-tert-butylphenyl ether.

The dispersant can be included in the solid electrolyte composition for all-solid-state batteries in an amount of 0.1 to 2% by weight, preferably 0.1 to 0.7% by weight, based on the total weight of the composition. Within this range, the dispersion of the solid electrolyte can be improved. If the dispersant is included in an amount less than 0.1% by weight, the improvement in the dispersion of the solid electrolyte cannot be expected. If it is included in an amount exceeding 2% by weight, the content of the solid electrolyte decreases, which may lead to a degradation in the performance of the all-solid-state battery.

The solid electrolyte composition for an all-solid-state battery of the present invention comprises the dispersant as described above, which improves the dispersion of the solid electrolyte in the solid electrolyte composition and suppresses agglomeration. Therefore, the solid electrolyte can exist without agglomeration in the solid electrolyte composition for an all-solid-state battery.

The particle size D₅₀ of the solid electrolyte can be 0.5 to 1.5µm, and the particle size D₉₉ can be 3 to 5µm. Preferably, the particle size D₅₀ can be 0.6 to 1.1µm, and the particle size D₉₉ can be 3 to 4µm.

The dispersion particle size D₅₀ of the solid electrolyte within the solid electrolyte composition for an all-solid-state battery can be 0.5 to 1.5µm, and the dispersion particle size D₉₉ can be 3 to 5µm. More specifically, when using a solid electrolyte with a particle size D₅₀ of 0.5 to 1.5µm and a particle size D₉₉ of 3 to 5µm as a solid electrolyte composition for an all-solid-state battery, the dispersion particle size D₅₀ of the solid electrolyte within the composition can be 0.5 to 1.5µm, and the dispersion particle size D₉₉ can be 3 to 5µm. In other words, the particle size of the solid electrolyte before dispersion and the dispersion particle size of the solid electrolyte after dispersion can be the same. Therefore, the solid electrolyte can exist in a dispersed form within the solid electrolyte composition for an all-solid-state battery without agglomeration.

In this specification, the dispersion particle size may refer to the particle size of the solid electrolyte dispersed within the solid electrolyte composition for an all-solid-state battery.

If the solid electrolyte composition for an all-solid-state battery does not include a dispersant, or if the weight-average molecular weight of the carboxylic acid compound dispersant is less than 1000 or exceeds 5000, the dispersion particle size D₉₉ of the solid electrolyte with a particle size D₉₉ of 3 to 5µm may exceed 5µm within the solid electrolyte composition for an all-solid-state battery. In other words, the solid electrolyte may agglomerate due to the lack of improved dispersion. However, if a carboxylic acid compound with a weight-average molecular weight between 1000 and 5000 is included as a dispersant, the particle size of the solid electrolyte and the dispersion particle size within the solid electrolyte composition for an all-solid-state battery can be the same. That is, by including the aforementioned dispersant, the solid electrolyte composition for an all-solid-state battery of the present invention can prevent agglomeration of the solid electrolyte within the composition and improve dispersion. In other words, the solid electrolyte can be well dispersed within the solid electrolyte composition for an all-solid-state battery without agglomeration, maintaining its particle size. Therefore, the particle size and the dispersion particle size of the solid electrolyte can be the same or similar.

Therefore, within the solid electrolyte composition for an all-solid-state battery, the ratio of the dispersion particle size (D₉₉) to the dispersion particle size (D₅₀) of the solid electrolyte can be 2 to 7, preferably 3 to 6.

The solid electrolyte may include one or more selected from the group consisting of sulfide-based solid electrolytes, polymer-based solid electrolytes, and oxide-based solid electrolytes, preferably include a sulfide-based solid electrolyte.

The sulfide-based solid electrolyte contains sulfur (S) and has ionic conductivity of metals belonging to Group 1 or Group 2 of the periodic table, and may include Li-P-S-based glass or LiP-S-based glass-ceramics.

Specifically, the sulfide-based solid electrolyte may include one or more selected from the group consisting of: Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS. Preferably, it may include one or more selected from the group consisting of: Li₆PS₅Cl, Li₆PS₅Br and Li₆PS₅I. The Li₆PS₅Cl, Li₆PS₅Br and Li₆PS₅I may be argyrodite-type solid electrolytes. Additionally, the sulfide-based solid electrolyte may be in a form doped with trace elements, for example, Li₆PS₅Cl additionally doped with bromine (Br).

The polymer-based solid electrolyte is a composite of a lithium salt and a polymer resin, i.e., a type of polymer electrolyte material formed by adding a polymer resin to a solvated lithium salt. It can exhibit ionic conductivity of about 1×10⁻⁷ S/cm or more, preferably about 1×10⁻⁵ S/cm or more.

Non-limiting examples of the polymer resin may include at least one of polyether polymers, polycarbonate polymers, acrylate polymers, polysiloxane polymers, phosphazene polymers, polyethylene derivatives, alkylene oxide derivatives such as polyethylene oxide, phosphate ester polymers, poly(agitation lysine), polyester sulfide, polyvinyl alcohol, polyvinylidene fluoride, and polymers containing ionic dissociable groups. Additionally, the polymer electrolyte may include one or more of a branched copolymer in which an amorphous polymer such as PMMA, polycarbonate, polysiloxane (PDMS), and/or phosphazene is copolymerized as a comonomer with a PEO (polyethylene oxide) main chain, as the polymer resin, a comb-like polymer resin, and a cross-linked polymer resin.

In the polymer-based solid electrolyte, the aforementioned lithium salt can be an ionizable lithium salt, represented as Li⁺X⁻. The anions of such lithium salts are not particularly limited, but may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The oxide-based solid electrolyte may contain oxygen (O) and possess ionic conductivity of metals belonging to Group 1 or Group 2 of the periodic table. For example, it can include one or more selected from the group consisting of: LLTO compounds, Li₆La₂CaTa₂O₁₂, Li₆La₂ANb₂O₁₂ (wherein A is Ca or Sr), Li₂Nd₃TeSbO₁₂, Li₃BO_{2.5}N_{0.5}, Li₉SiAlO₈, LAGP compounds, LATP compounds, Li₁₊ₓTi₂₋ₓAlₓSi_{y}(PO₄)_{3-y} (where 0≤x≤1, and 0≤y≤1), LiAlₓZr₂₋ₓ(PO₄)₃ (where 0≤x≤1, and 0≤y≤1), LiTiₓZr₂₋ₓ(PO₄)₃ (where 0≤x≤1, and 0≤y≤1), LISICON compounds, LIPON compounds, perovskite compounds, NASICON compounds, and LLZO compounds.

The solid electrolyte may be included in an amount of 95 to 99% by weight based on the total weight of the solid electrolyte composition for an all-solid-state battery.

The type of the binder is not limited to a specific type so long as it is used in the art.

For example, acrylonitrile butadiene rubber (NBR), styrene butadiene rubber (SBR), butadiene rubber (BR), styrene-butadiene-styrene copolymer (SBS), polybutadiene (PAN), styrene-ethylene/butylene-styrene block copolymer (SEBS), silicone rubber (SR), hydrogenated nitrile butadiene rubber (HNBR), poly(ethylene vinyl acetate) (PEVA), poly (methyl methacrylate) (PMMA), polyisobutene (PIB), polyacrylate, and the like may be used, but are not limited thereto, and styrene-butadiene-styrene copolymers may be preferred in the present invention.

The binder may be included in an amount of 0.5 to 5% by weight based on the total weight of the solid electrolyte composition for an all-solid-state battery.

The solid electrolyte composition for an all-solid-state battery of the present invention may be in the form of a slurry, where the solid electrolyte, binder, and dispersant are dispersed in a solvent.

The solvent is not particularly limited as long as it can disperse the solid electrolyte, binder, and dispersant. Examples include xylene, hexane, benzene, anisole, isobutyl isobutyrate, toluene, and butyl butyrate.

### Solid electrolyte membrane for an all-solid-state battery

Additionally, the present invention relates to a solid electrolyte membrane for an all-solid-state battery, which is manufactured using the solid electrolyte composition for an all-solid-state battery described above.

The solid electrolyte membrane for an all-solid-state battery can be manufactured by applying the solid electrolyte composition for an all-solid-state battery onto one side of a release film, drying it, and then removing the release film.

The solid electrolyte composition for an all-solid-state battery shows excellent dispersion without agglomeration within the composition. Therefore, when manufacturing a solid electrolyte membrane for an all-solid-state battery using this composition, it is possible to produce a solid electrolyte membrane with uniform thickness and excellent ionic conductivity. In the present invention, the thickness of the solid electrolyte membrane for an all-solid-state battery can be 20 to 50µm. Additionally, the ionic conductivity of the solid electrolyte membrane for an all-solid-state battery can be 1.3×10⁻³ S/cm or higher. This ionic conductivity may be the one measured at room temperature (25°C).

### All-solid-state battery

Additionally, the present invention relates to an all-solid-state battery comprising: a positive electrode, a negative electrode, and a solid electrolyte membrane interposed therebetween. The solid electrolyte membrane can be the solid electrolyte membrane for an all-solid-state battery described above in the present invention.

The all-solid-state battery can be a lithium secondary battery without limitations on the positive or negative electrode, and can be a lithium-air battery, lithium oxide battery, lithium-sulfur battery, or lithium metal battery.

The positive electrode can include a positive electrode current collector and a positive electrode active material layer applied on one or both sides of the positive electrode current collector.

The positive electrode current collector is intended to support the positive electrode active material layer, and it is not particularly limited as long as it has excellent conductivity and is electrochemically stable in the voltage range of a lithium secondary battery. For example, the positive electrode current collector can be any one of the metals selected from the group consisting of: copper, aluminum, stainless steel, titanium, silver, palladium, nickel, their alloys, and their combinations. The stainless steel can be surface-treated with carbon, nickel, titanium, or silver. Preferably, an aluminum-cadmium alloy can be used as the alloy. Additionally, sintered carbon, non-conductive polymers surface-treated with conductive materials, or conductive polymers can also be used.

The positive electrode current collector can enhance its bonding strength with the positive electrode active material by forming fine irregularities on its surface. It can be used in various forms such as films, sheets, foils, meshes, nets, porous bodies, foams, or non-woven fabrics.

The positive electrode active material layer can include a positive electrode active material and may optionally contain a conductive material and a binder.

The positive electrode active material can vary depending on the type of all-solid-state battery. For example, the positive electrode active material may include, but is not limited to, the following compounds: layered compounds such as lithium cobalt oxide (LiCoO₂) and lithium nickel oxide (LiNiO₂), or compounds substituted with one or more transition metals; lithium manganese oxides such as the one represented by the formula of Li₁₊ₓMn₂₋ₓO₄ (wherein 0≤x≤0.33), LiMnO₃, LiMn₂O₃, and LiMnO₂; lithium copper oxide (Li₂CuO₂); vanadium oxides such as LiV₃O₈, V₂O₅, and Cu₂V₂O₇; nickel site-type lithium nickel oxides represented by the formula LiNi₁₋ₓMₓO₂ (where M = Co, Mn, Al, Cu, Fe, Mg, B, or Ga; and 0.01≤x≤0.3); lithium manganese composite oxides represented by the formula LiMn₂₋ₓMₓO₂ (where M = Co, Ni, Fe, Cr, Zn, or Ta; and 0.01 ≤x≤0.1) or Li₂Mn₃MO₈ (where M = Fe, Co, Ni, Cu, or Zn); spinel structure lithium manganese composite oxides represented by the formula LiNiₓMn₂₋ₓO₄; LiCoPO_{4;} LiFePO₄; and sulfur-based compounds such as elemental sulfur (S₈), Li₂Sₙ (n=1), organic sulfur compounds, or carbon-sulfur polymers ((C₂Sₓ)ₙ: x=2.5 ~ 50, n=2).

The conductive material is a material that electrically connects the electrolyte and the positive electrode active material and serves as a pathway for electrons to move from the current collector to the positive electrode active material, and can be used without restriction as long as it does not cause chemical changes in the lithium secondary battery and has porosity and conductivity.

For example, the conductive material can be a porous carbon-based material. Such carbon-based materials include carbon black, graphite, graphene, activated carbon, carbon fibers, etc. It can also be metallic fibers like metal mesh; metallic powders such as copper, silver, nickel, aluminum; or organic conductive materials such as polyphenylene derivatives. These conductive materials can be used alone or in combination.

Currently, commercially available conductive materials include acetylene black series (products from Chevron Chemical Company or Gulf Oil Company), Ketjen Black EC series (products from Armak Company), Vulcan XC-72 (products from Cabot Company), and Super P (products from MMM). Examples include acetylene black, carbon black, and graphite.

Additionally, the binder can enhance the bonding strength among the components that make up the positive electrode and between these components and the current collector, and any binder known in the art can be used.

For example, the binder may include one, or a mixture or copolymer of two or more selected from the group consisting of: fluororesin binders such as polyvinylidene fluoride (PVdF) or polytetrafluoroethylene (PTFE); rubber-based binders such as styrene-butadiene rubber (SBR), acrylonitrile-butadiene rubber, or styrene-isoprene rubber; cellulose-based binders such as carboxymethyl cellulose (CMC), starch, hydroxypropyl cellulose, or regenerated cellulose; poly alcohol-based binders; polyolefin-based binders such as polyethylene or polypropylene; polyimide-based binders; polyester-based binders; and silane-based binders.

The negative electrode may include a negative electrode current collector and a negative electrode active material layer positioned on the negative electrode current collector. Additionally, similar to the positive electrode, the negative electrode may include a conductive material and a binder as needed. In this case, the negative electrode current collector, conductive material, and binder are as described above.

The negative electrode active material may be any material that can reversibly intercalate or deintercalate lithium ions (Li⁺) or can react with lithium ions to form a lithium-containing compound reversibly.

For example, the negative electrode active material may include, but is not limited to, one or more carbon-based materials selected from the group consisting of crystalline artificial graphite, crystalline natural graphite, amorphous hard carbon, low-crystalline soft carbon, carbon black, acetylene black, Ketjen black, Super-P, graphene, and fibrous carbon, Si-based materials, metal complex oxides such as LiₓFe₂O₃ (wherein 0≤x≤1), LiₓWO₂ (wherein 0≤x≤1), and SnxMe₁₋ₓMe'_{y}O_{z} (where Me: Mn, Fe, Pb, Ge; Me': Al, B, P, Si, Group 1, 2, 3 elements of the periodic table, halogen; 0<x≤1; 1≤y≤3; and 1≤z≤8); lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni based materials; titanium oxides; and lithium titanium oxides.

Additionally, the negative electrode may include a negative electrode current collector and a coating layer comprising metal-carbon composite particles positioned on the negative electrode current collector. This may refer to an anodeless configuration that does not include a traditional negative electrode active material.

The negative electrode may form a lithium metal layer by lithium ions passing through the coating layer, reaching the surface of the negative electrode current collector, and being deposited during the charging of the all-solid-state battery.

The metal-carbon composite particles may have carbon particles and metal particles either attached to each other or coated on one another, and they can be physically or chemically bonded.

The carbon particles may include natural graphite, artificial graphite, hard carbon, soft carbon, carbon black, acetylene black, Ketjen black, channel black, furnace black, lamp black, thermal black, carbon nanotubes, fullerene, carbon fibers, and fluorinated carbon.

The metal particles are lithiophilic metals, such as Ni, Cu, Ag, Au, Pt, Al, Zn and Bi, and may be combinations of one or more of these metals. Introducing these lithiophilic metals helps form a stable and uniform lithium layer on the surface of the current collector.

The negative electrode may be manufactured by mixing a binder solution with the composite particles to prepare a slurry for forming a coating layer, applying the slurry to the negative electrode current collector, and drying it. The binder used can be any conventional binder commonly used in the art.

The manufacturing of an all-solid-state battery is not specifically limited in the present invention and can employ known methods.

For example, a solid electrolyte membrane is disposed between a positive electrode and a negative electrode, and the cell is assembled by compression molding. The assembled cell is installed in an outer material and sealed by heating compression or the like. The outer material can be a laminated pack of aluminum, stainless steel, etc. or a metal container such as a cylindrical or square container.

For example, the electrodes of the positive electrode and the negative electrode are prepared by a slurry coating process in which a slurry composition comprising a respective electrode active material, a solvent, and a binder is prepared, coated, and then dried.

The method of coating the electrode slurry on the current collector may include dispensing the electrode slurry onto the current collector and uniformly dispersing it using a doctor blade or the like, die casting, comma coating, screen printing, or the like. In addition, the electrode slurry can be molded on a separate substrate and then bonded to the current collector by pressing or lamination. In this case, the final coating thickness can be controlled by adjusting the concentration of the slurry solution or the number of coatings.

The drying process is a process of removing solvent and moisture from the slurry in order to dry the slurry coated on the metal current collector, which may vary depending on the solvent used. For example, it may be performed in a vacuum oven at 50 to 200 °C. Drying methods include, for example, drying by warm air, hot air, low humidity air, vacuum drying, irradiation with (far) infrared or electromagnetic radiation, etc. The drying time is not particularly limited, but is typically in the range of 30 seconds to 24 hours.

After the drying process, a cooling step may be further included, where the cooling step can involve slow cooling to room temperature to ensure that the recrystallized structure of the binder is well-formed.

Additionally, if necessary, to increase the capacity density of the electrode and improve the adhesion between the current collector and the active materials after the drying process, a rolling process can be performed. This process involves passing the electrode between two heated rolls to compress it to the desired thickness. The rolling process is not particularly limited in the present invention and can use known pressing methods. For example, it can be performed by passing the electrode between rotating rolls or using a flat press.

The shape of the all-solid-state battery is not particularly limited and can be in various forms such as cylindrical, stacked, coin-shaped, etc.

### [Mode for Practicing the Invention]

Hereinafter, preferred examples of the present invention are described for the purpose of illustrating the present invention, but it will be apparent to those skilled in the art that various changes and modifications are possible within the scope of the present invention and the technical idea, and that such changes and modifications fall within the scope of the appended patent claims.

### Example 1.

### Example 1-1. Manufacturing of Solid Electrolyte Composition for All-Solid-State Battery

A solid electrolyte composition for an all-solid-state battery in a slurry form according to Example 1-1 was prepared by mixing argyrodite (Li₆PS₅Cl) with a particle size (D₅₀) of 0.6 to 0.8µm and a particle size (D₉₉) of 3 to 4µm as the solid electrolyte, styrene-butadiene-styrene copolymer as the binder, and glycolic acid ethoxylate lauryl ether with a weight-average molecular weight of 4080 as the dispersant in a weight ratio of 98:1.7:0.3, and then adding the mixture to isobutyl isobutyrate.

### Example 1-2. Manufacturing of Solid Electrolyte Membrane for All-Solid-State Battery

Polyethylene terephthalate was used as a release film. The solid electrolyte composition manufactured in Example 1-1 was applied to the release film using a bar coater. It was then dried under vacuum for 5 hours, and the release film was removed to produce the solid electrolyte membrane for an all-solid-state battery for Example 1-2.

### Example 1-3.

A positive electrode was manufactured by mixing a positive electrode active material (NCM 811), a conductive material (carbon fiber), a solid electrolyte (Li₆PS₅Cl), and a binder (polytetrafluoroethylene) in a weight ratio of 84:0.2:14.8:1, then applying the mixture to the positive electrode current collector and rolling it.

A negative electrode was manufactured by applying a mixture of the negative electrode active material (carbon black) and binder (polyvinylidene fluoride) in a thickness of 20µm to a SUS having a thickness of 10µm, which is a negative current collector.

The solid electrolyte membrane prepared in Example 1-2 was interposed between the positive electrode and the negative electrode to manufacture the all-solid-state battery of Example 1-3.

### Example 2.

Except for using glycolic acid ethoxylate oleyl ether with a weight-average molecular weight of 2220 as the dispersant, the procedures of Examples 1-1, 1-2, and 1-3 were followed to prepare the solid electrolyte composition for an all-solid-state battery in Example 2-1, the solid electrolyte membrane for an all-solid-state battery in Example 2-2, and the all-solid-state battery in Example 2-3.

### Example 3.

Except for using glycolic acid ethoxylate 4-tert-butylphenyl ether with a weight-average molecular weight of 1080 as the dispersant, the procedures of Examples 1-1, 1-2, and 1-3 were followed to prepare the solid electrolyte composition for an all-solid-state battery in Example 3-1, the solid electrolyte membrane for an all-solid-state battery in Example 3-2, and the all-solid-state battery in Example 3-3.

### Comparative Example 1.

Except for not using a dispersant, the procedures of Examples 1-1, 1-2, and 1-3 were followed to manufacture the solid electrolyte composition for an all-solid-state battery in Comparative Example 1-1, the solid electrolyte membrane for an all-solid-state battery in Comparative Example 1-2, and the all-solid-state battery in Comparative Example 1-3.

### Comparative Example 2.

Except for using glycolic acid ethoxylate lauryl ether with a weight-average molecular weight of 740 as the dispersant, the procedures of Examples 1-1, 1-2, and 1-3 were followed to manufacture the solid electrolyte composition for an all-solid-state battery in Comparative Example 2-1, the solid electrolyte membrane for an all-solid-state battery in Comparative Example 2-2, and the all-solid-state battery in Comparative Example 2-3.

### Comparative Example 3.

Except for using glycolic acid ethoxylate oleyl ether with a weight-average molecular weight of 5680 as the dispersant, the procedures of Examples 1-1, 1-2, and 1-3 were followed to prepare the solid electrolyte composition for an all-solid-state battery in Comparative Example 3-1, the solid electrolyte membrane for an all-solid-state battery in Comparative Example 3-2, and the all-solid-state battery in Comparative Example 3-3.

### Experimental Example 1. Measurement of Dispersion Particle Size of Solid Electrolyte in Solid Electrolyte Composition for All-Solid-State Battery

The dispersion particle size of the solid electrolyte within the solid electrolyte composition for an all-solid-state battery in Examples 1-1 to 3-1 and Comparative Examples 1-1 to 3-1 was measured using a particle size analyzer.

The solid electrolyte used in Examples 1-1 to 3-1 and Comparative Examples 1-1 to 3-1 was argyrodite (Li₆PS₅Cl) with a particle size (D50) of 0.6 to 0.8µm and a particle size (D99) of 3 to 4µm. The dispersion particle size was measured to confirm that the solid electrolyte was well-dispersed within the solid electrolyte composition for an all-solid-state battery without agglomeration.

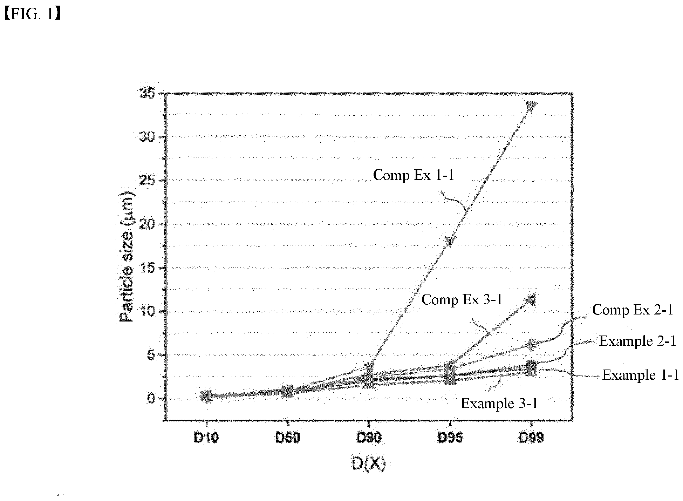

The results are presented in Table 1 and FIG. 1.

**[Table 1]**

| | Example 1-1 | Example 2-1 | Example 3-1 | Comparativ e Example 1-1 | Comparativ e Example 2-1 | Comparativ e Example 3-1 |
|---|---|---|---|---|---|---|
| D10 | 0.275 µm | 0.171 µm | 0.144 µm | 0.42 µm | 0.17 µm | 0.227 µm |
| D50 | 1.01 µm | 0.693 µm | 0.603 µm | 0.875 µm | 0.733 µm | 0.815 µm |
| D90 | 2.25 µm | 2.03 µm | 1.59 µm | 3.64 µm | 2.43 µm | 2.74 µm |
| D95 | 2.66 µm | 2.63 µm | 2.05 µm | 18.2 µm | 3.39 µm | 3.79 µm |
| D99 | 3.46 µm | 3.86 µm | 3.02 µm | 33.6 µm | 6.18 µm | 11.4 µm |
| D99/D50 | 3.43 | 5.57 | 5.01 | 38.4 | 8.43 | 13.99 |
| D95/D50 | 2.63 | 3.8 | 3.4 | 20.8 | 4.62 | 4.65 |

Table 1 shows that, in the solid electrolyte composition for an all-solid-state battery in Examples 1-1 to 3-1, dispersion particle size (D₅₀ and D₉₉) values were very similar to the particle size (D₅₀ and D₉₉) of the solid electrolyte before dispersion. This indicates that the solid electrolyte is well-dispersed within the composition without agglomeration.

Comparative Example 1-1, which does not include a dispersant, Comparative Example 2-1, which uses a carboxylic acid compound with a weight-average molecular weight of less than 1000 as the dispersant, and Comparative Example 3-1, which uses a carboxylic acid compound with a weight-average molecular weight exceeding 5000 as the dispersant, showed significant agglomeration of the solid electrolyte within the solid electrolyte composition for an all-solid-state battery, while failing to maintain the particle size. This resulted in a considerable increase in the dispersion particle size (D₉₉). Notably, in Comparative Example 1-1, where no dispersant was included, the agglomeration of the solid electrolyte was the most pronounced, leading to a substantial increase in the dispersion particle size (D₉₉). Even when a dispersant was included, if the carboxylic acid compound had a weight-average molecular weight outside the range of 1000 to 5000, the dispersion of the solid electrolyte was not effective, resulting in an increased dispersion particle size (D₉₉). Therefore, Comparative Examples 1-1 to 3-1 demonstrate that the dispersion particle size (D₉₉) of the solid electrolyte increases within the solid electrolyte composition for an all-solid-state battery, indicating the occurrence of agglomeration of the solid electrolyte.

### Experimental Example 2. Measurement of Ionic Conductivity of Solid Electrolyte Membranes for All-Solid-State Battery

The thickness of the solid electrolyte membranes for an all-solid-state battery in Examples 1-2 to 3-2 and Comparative Examples 1-2 to 3-2 is 30 µm, and the ionic conductivity of the solid electrolyte membranes for an all-solid-state battery was measured.

The ionic conductivity was measured by placing aluminum foil on the top and bottom of the solid electrolyte membrane for an all-solid-state battery, assembling a jig cell, and then pressing it at 360 MPa. The results are shown in Table 2 below.

**[Table 2]**

| | Ionic Conductivity (S/cm) |
|---|---|
| Example 1-2 | 1.41×10⁻³ |
| Example 2-2 | 1.36×10⁻³ |
| Example 3-2 | 1.32×10⁻³ |
| Comparative Example 1-2 | 1.02×10⁻³ |
| Comparative Example 2-2 | 1.09×10⁻³ |
| Comparative Example 3-2 | 1.04×10⁻³ |

Examples 1-2 to 3-2 used a carboxylic acid compound with a weight-average molecular weight of 1000 to 5000 as a dispersant, showing high ionic conductivity of the solid electrolyte membrane.

Comparative Example 1-2 did not include a dispersant, Comparative Example 2-2 used a carboxylic acid compound with a weight-average molecular weight of less than 1000 as a dispersant, and Comparative Example 3-2 used a carboxylic acid compound with a weight-average molecular weight exceeding 5000 as a dispersant. As can be seen from the results of Experimental Example 1, the solid electrolyte in the solid electrolyte composition for an all-solid-state battery in Comparative Examples 1-1 to 3-1 was not well dispersed, and agglomeration was observed. Therefore, when this was used to manufacture a solid electrolyte membrane for an all-solid-state battery, it was found that the thickness was uneven, and the solid electrolyte membrane for an all-solid-state battery had low ionic conductivity. In the case of Comparative Example 1-2, the dispersion of the solid electrolyte was very poor, resulting in agglomeration of the solid electrolyte. However, since the content of the solid electrolyte increased due to the absence of a dispersant, the ionic conductivity was similar to those of Comparative Examples 2-2 and 3-2.

### Experimental Example 3. Evaluation of the Lifetime Characteristics of All-Solid-State Battery

The lifetime characteristics of an all-solid-state battery in Examples 1-3 to 3-3 and Comparative Examples 1-3 to 3-3 were measured.

The lifetime characteristics were measured by charging the all-solid-state battery to 4.25V at 0.33C in CCCV mode at a temperature of 60°C, and then discharging it to 3.0V at a constant current, performing 150 cycles of charge and discharge, and determining the capacity retention rate.

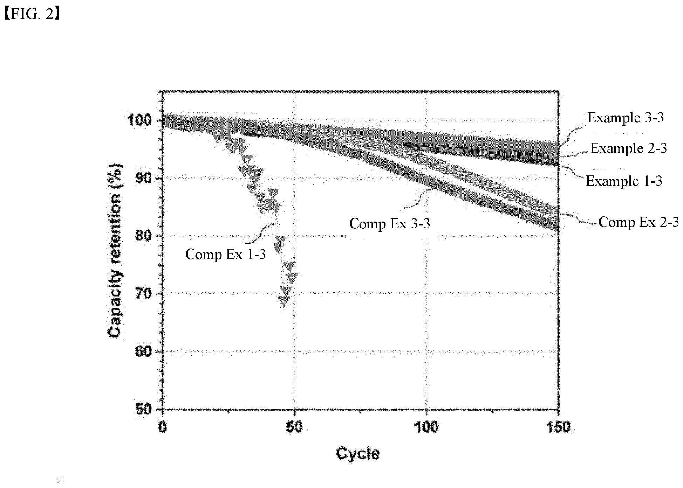

The results are shown in FIG. 2.

Examples 1-3 to 3-3 used a carboxylic acid compound with a weight-average molecular weight of 1000 to 5000 as a dispersant, showing excellent lifetime characteristics of the all-solid-state battery.

Comparative Example 1-1 did not include a dispersant, Comparative Example 2-1 used a carboxylic acid compound with a weight-average molecular weight of less than 1000 as a dispersant, and Comparative Example 3-1 used a carboxylic acid compound with a weight-average molecular weight exceeding 5000 as a dispersant. As can be seen from the results of Experimental Example 1, the solid electrolyte in the solid electrolyte composition for an all-solid-state battery in Comparative Examples 1-1 to 3-1 was not well dispersed, and agglomeration was observed. Consequently, as can be seen from the results of Experimental Example 2, the thickness of the solid electrolyte membranes for an all-solid-state battery in Comparative Examples 1-2 to 3-2 was uneven, and the ionic conductivity was low. Therefore, it was found that when these were used to manufacture an all-solid-state battery, the lifetime characteristics of the all-solid-state battery were very poor.

The present invention relates to a solid electrolyte composition for an all-solid-state battery using a carboxylic acid compound with a weight-average molecular weight of 1000 to 5000 as a dispersant, and due to the dispersant, the solid electrolyte does not agglomerate in the composition, resulting in effective dispersion. Additionally, the solid electrolyte membrane for an all-solid-state battery made from this solid electrolyte composition has a uniform thickness and high ionic conductivity, and the all-solid-state battery including this film can exhibit improved lifetime characteristics.

## Claims

1. A solid electrolyte composition for an all-solid-state battery, comprising:
a solid electrolyte, a binder, and a dispersant,
wherein the dispersant is a carboxylic acid compound with a weight-average molecular weight of 1000 to 5000.

2. The solid electrolyte composition according to claim 1,
wherein a particle size D50 of the solid electrolyte is 0.5 to 1.5 µm, and a particle size D99 is 3 to 5 µm, and,
wherein, in the solid electrolyte composition for an all-solid-state battery, a dispersion particle size D50 of the solid electrolyte is 0.5 to 1.5 µm, and a dispersion particle size D99 is 3 to 5 µm.

3. The solid electrolyte composition according to claim 2,
wherein, in the solid electrolyte composition for an all-solid-state battery, the ratio of a dispersion particle size (D₉₉)/a dispersion particle size (D₅₀) of the solid electrolyte is 2 to 7.

4. The solid electrolyte composition according to claim 1,
wherein the dispersant is one or more selected from the group consisting of glycolic acid ethoxylate lauryl ether, glycolic acid ethoxylate oleyl ether, and glycolic acid ethoxylate 4-tert-butylphenyl ether.

5. The solid electrolyte composition according to claim 1,
wherein the solid electrolyte composition for an all-solid-state battery comprises 95 to 99% by weight solid electrolyte, 0.5 to 5% by weight binder, and 0.1 to 2% by weight dispersant, based on a total weight of the solid electrolyte composition for an all-solid-state battery.

6. The solid electrolyte composition according to claim 1,
wherein the solid electrolyte comprises one or more selected from a group consisting of sulfide-based solid electrolyte, polymer-based solid electrolyte, and oxide-based solid electrolyte.

7. The solid electrolyte composition according to claim 6,
wherein the solid electrolyte comprises sulfide-based solid electrolyte.

8. A solid electrolyte membrane for an all-solid-state battery manufactured using the solid electrolyte composition for an all-solid-state battery according to clam 1.

9. The solid electrolyte membrane according to claim 8,
wherein the solid electrolyte membrane has a thickness of 20 to 50 µm.

10. The solid electrolyte membrane according to claim 8,
wherein the solid electrolyte membrane has ionic conductivity of 1.3×10⁻³S/cm or higher.

11. **12.** An all-solid-state battery comprising: a positive electrode, a negative electrode, and a solid electrolyte membrane interposed therebetween,
wherein the solid electrolyte membrane is the solid electrolyte membrane according to claim 8.
